# EUROPÄISCHE PATENTSCHRIFT

(11) **EP 4 182 226 B1**
(45) Veröffentlichungstag und Bekanntmachung des Hinweises auf die Patenterteilung: **28.08.2024**
(21) Anmeldenummer: 22740399.5
(22) Anmeldetag: 06.07.2022
(51) Int. Cl.: B64D 9/00

(54) **FRACHTLADESYSTEM UND FRACHTLADEVERFAHREN ZUM LADEN VON ULDS IN EIN LUFTFAHRZEUG**
FREIGHT LOADING SYSTEM AND LOADING METHOD FOR ULDS INTO AN AIRCRAFT
SYSTÈME DE CHARGE DE FRET ET PROCÉDÉ DE CHARGE D'"ULD" DANS UN AÉRONEF

(30) Priorität: 14.07.2021 DE 102021118250
(43) Veröffentlichungstag der Anmeldung: 24.05.2023
(73) Patentinhaber: Airbus DS Airborne Solutions GmbH, 28199 Bremen (DE)
(72) Erfinder: KRANZ, Willi, 28199 Bremen (DE)
(74) Vertreter: KASTEL Patentanwälte PartG mbB
(86) Internationale Anmeldenummer: PCT/EP2022/068700
(87) Internationale Veröffentlichungsnummer: WO 2023/285229

(56) Entgegenhaltungen:
- DE-A1- 10 338 704
- DE-A1- 102011 000 819
- DE-A1- 102014 105 657
- DE-A1- 102017 130 007
- US-A1- 2007 057 120
- US-A1- 2019 210 727

## Beschreibung

Die Erfindung betrifft ein Frachtladesystem und ein Frachtladeverfahren zum Beladen eines Frachtraums eines Luftfahrzeugs mit Unit Load Devices (ULD). Weiter betrifft die Erfindung ein Computerprogramm mit Instruktionen zum Durchführen des Frachtladeverfahrens. Schließlich betrifft die Erfindung ein Luftfahrzeug, insbesondere Flugzeug, umfassend ein derartiges Frachtladesystem.

Zur Begriffsdefinition, zum technologischen Hintergrund und zum Stand der Technik wird insbesondere auf folgende Literaturstellen verwiesen:
[1] Unit Load Device - Wikipedia, heruntergeladen aus dem Internet unter https://de.wikipedia.org/wiki/Unit Load_Device am 06.07.2021
[2] DE 20 2019 103 706 U1
[3] DE 10 2014 105 657 A1
[4] DE 10 2011 000 820 B4
[5] DE 10 2011 000 819 A1
[6] DE 10 2011 000 743 B4
[7] DE 10 2017 130 007 A1
[8] US 2019/210727 A1
[9] US 2007/057120 A1
[10] DE 103 38 704 A1
[11] DE 10 2017 130007 A1

In der Literaturstelle [1] ist angegeben, was unter Unit Load Device (kurz ULD) zu verstehen ist. Demnach sind dies genormte Luftfrachtbehälter oder Luftfrachtpaletten mit einer Grundplatte bestimmten vorgegebenen Ausmaßes. Insbesondere gibt es ULDs größerer Breite, die z.B. eine gesamte Breite eines Frachtraums einnehmen können und ULDs mit einer etwa halb so großen kleineren Breite, die z.B. auf einer Hälfte des Frachtraums abgelegt werden können. Die senkrecht zur Breite gemessene Länge der Grundplatte der ULDs ist ebenfalls genormt und ist aus einer von mehreren möglichen Längen ausgewählt. Somit hat jede ULD eine vorgegebene Länge. Aus den Literaturstellen [2] bis [6] gehen Frachtladesysteme und Frachtladeverfahren zum Beladen von Frachträumen von Luftfahrzeugen mit derartigen ULDs hervor. Insbesondere offenbaren die Literaturstellen [3] bis [6] ein Frachtladesystem zum Beladen eines Frachtraums eines Luftfahrzeugs mit Unit Load Devices (ULD), die eine größere erste oder kleinere zweite vorgegebene Breite und eine vorgegebene Länge aufweisen, wobei das Frachtladesystem eine erste Reihe von Frachtförderantriebseinheiten und eine zweite Reihe von Frachtförderantriebseinheiten umfasst, wobei die Frachtförderantriebseinheiten jeweils ein Antriebselement zum Angreifen an der ULD zwecks Antreibens einer Bewegung der ULD und einen Sensor aufweisen, der dazu ausgebildet ist, das Abdecken der Frachtförderantriebseinheit durch eine ULD zu erfassen und einen das Abdecken anzeigendes Abdecksignal abzugeben, wobei die erste und die zweite Reihe derart in Breitenrichtung beabstandet sind, dass ULDs mit der ersten Breite Frachtförderantriebseinheiten der ersten und der zweiten Reihe zum Antreiben durch diese abdecken und ULDs mit der zweiten Breite Frachtförderantriebseinheiten nur einer der ersten und der zweiten Reihe zum Antreiben durch diese abdecken, und wobei die Frachtförderantriebseinheiten in der jeweiligen Reihe mit einem derartigen Abstand in Längenrichtung beabstandet sind, dass beim Fördern der ULDs immer eine Anzahl n in Längenrichtung benachbarte Frachtförderantriebseinheiten durch eine ULD abgedeckt werden, wobei n eine natürliche Zahl größer 1 ist. Weiter umfassen die aus [3] bis [6] bekannten Frachtladesysteme eine Steuerung, die dazu ausgebildet ist, die Frachtförderantriebseinheiten abhängig von den durch die Abdecksignalen der Sensoren der Frachtförderantriebseinheiten angegebenen Abdeckzuständen der Frachtförderantriebseinheiten zu steuern. Die Literaturstelle [5] beschreibt außerdem eine Eingangs-Frachtfördereinrichtung mit einem Array von Sensoren nahe einer Frachttür des Frachtraums mit zugeordneter Steuerung, die anhand des Musters der Abdecksignale des Arrays den Typ der UDL erkennt. Dies ist ein Beispiel für eine ULD-Erfassungseinrichtung zum Erfassen, ob die ULD die erste oder die zweite vorgegebene Breite aufweist. Die Literaturstelle [8] beschreibt eine Antriebseinheit (PDU) zum Bewegen von Fracht in einem Luftfahrzeug mit einem Aktor zum Bewegen von ULDs, einer Netzwerkzugangseinheit, die dazu eingerichtet ist, den Zustand einer zweiten PDU zu empfangen und Daten zu senden, und einer Steuerung. Die Literaturstelle [9] beschreibt eine lenkbare, zurückziehbare Antriebseinheit (SRPDU) zum Bewegen von Fracht in zueinander rechtwinklige Richtungen.

Mit den vorgenannten Frachtladesystemen ist eine automatisierte Beladung von Frachträumen von Luftfahrzeugen, insbesondere Flugzeugen, möglich. Die Förderung der ULDs erfolgt mittels Frachtförderantriebseinheiten (engl. Power drive units, kurz PDUs), die mit Antriebselementen, meist Rollen oder Kugeln, die durch einen Aktor gesteuert über eine Steuerung angetrieben sind. Die PDUs sind mit Sensoren, meist optischen Sensoren, versehen, die ein Abdecken einer PDU durch eine ULD erfassen und ein Abdecksignal abgeben. In der Steuerung wird dann anhand der Abdecksignale erkannt, welche PDU gerade mit einer ULD abgedeckt ist. Aufgrund dessen können unterschiedliche Fördervorgänge, wie Einfahren einer Reihe von ULDs auf freie Plätze, Umparken von ULDs, Ausladen von ULDs usw. gesteuert werden. Dabei werden in der Regel nur die Antriebsmittel der PDUs bewegt, die durch eine ULD abgedeckt sind.

Das Abdecksignal einer jeder Frachtfördereinheit ist daher eine wichtige Eingangsgröße zum Ablaufen der korrekten Be- und Entladevorgänge. Fehlerhafte Abdecksignale können zu Fehlfunktionen führen. Daher hat man bereits erhebliche Anstrengungen unternommen, solche fehlerhafte Abdecksignale möglichst zu verringern. Hierzu ist beispielsweise in der Literaturstelle [7] ein verbesserter und entsprechend aufwändigerer Sensor zum Erfassen des Abdeckens einer PDU vorgeschlagen worden. Ansonsten geht man bisher den Weg, ULDs, die fehlerhafte Abdecksignale erzeugen, auszutauschen.

Die Erfindung hat sich zur Aufgabe gestellt, ein Frachtladesystem und ein Frachtladeverfahren zum zumindest teilautomatisierten Beladen eines Frachtraums eines Luftfahrzeuges hinsichtlich Vermeidens von Stockungen oder Fehlern mit geringerem Aufwand zu verbessern.

Zum Lösen dieser Aufgabe schafft die Erfindung ein Frachtladesystem und ein Frachtladeverfahren gemäß den unabhängigen Ansprüchen.

Vorteilhafte Ausgestaltungen sind Gegenstand der Unteransprüche.

Die Erfindung schafft gemäß einem ersten Aspekt davon ein Frachtladesystem zum Beladen eines Frachtraums eines Luftfahrzeugs mit Unit Load Devices (ULD), die eine größere erste oder kleinere zweite vorgegebene Breite und eine vorgegebene (Mindest-)Länge aufweisen, wobei das Frachtladesystem umfasst:
eine erste Reihe von Frachtförderantriebseinheiten und eine zweite Reihe von Frachtförderantriebseinheiten, wobei die Frachtförderantriebseinheiten jeweils ein Antriebselement zum Angreifen an der ULD zwecks Antreibens einer Bewegung der ULD und einen Sensor aufweisen, der dazu ausgebildet ist, das Abdecken der Frachtförderantriebseinheit durch eine ULD zu erfassen und einen das Abdecken anzeigendes Abdecksignal abzugeben,
wobei die erste und die zweite Reihe derart in Breitenrichtung beabstandet sind, dass ULDs mit der ersten Breite Frachtförderantriebseinheiten der ersten und der zweiten Reihe zum Antreiben durch diese abdecken und ULDs mit der zweiten Breite Frachtförderantriebseinheiten nur einer der ersten und der zweiten Reihe zum Antreiben durch diese abdecken, und wobei die Frachtförderantriebseinheiten in der jeweiligen Reihe mit einem derartigen Abstand in Längenrichtung beabstandet sind, dass beim Fördern der ULDs immer eine Anzahl n in Längenrichtung benachbarte Frachtförderantriebseinheiten durch eine ULD abgedeckt werden, wobei n eine natürliche Zahl größer 1 ist,
eine ULD-Erfassungseinrichtung zum Erfassen, ob das ULD die erste oder die zweite vorgegebene Breite aufweist,
und eine Steuerung, die dazu ausgebildet ist,
die Frachtförderantriebseinheiten abhängig von den durch die Abdecksignalen der Sensoren der Frachtförderantriebseinheiten angegebenen Abdeckzuständen der Frachtförderantriebseinheiten zu steuern,
bei einem nicht vorhandenen Abdecksignal eines Sensors einer ersten Frachtförderantriebseinheit einen Abdeckzustand der ersten Frachtförderantriebseinheit durch die Steuerung zu generieren, wenn
   a) die ULD-Erfassungseinrichtung eine ULD der ersten Breite erfasst hat und ein Sensor der ersten Frachtförderantriebseinheit in Breitenrichtung benachbarten Frachtförderantriebseinheit der benachbarten Reihe das Abdecksignal abgibt, oder
   b) die ULD-Erfassungseinrichtung eine ULD der ersten oder zweiten Breite erfasst hat und ein Sensor wenigstens einer der der ersten Frachtförderantriebseinheit benachbarten Frachtförderantriebseinheiten der gleichen Reihe wie die erste Fördereinrichtung das Abdecksignal abgeben, und
das Steuern der Frachtförderantriebseinheiten mit dem durch die Steuerung generierten Abdeckzustand in der gleichen Weise durchzuführen, wie wenn der durch das Abdecksignal erzeugte Abdeckzustand der ersten Fördereinrichtung vorliegt.

Vorzugsweise ist die Steuerung dazu ausgebildet, bei einem nicht vorhandenen Abdecksignal eines Sensors der ersten Frachtförderantriebseinheit den Abdeckzustand der ersten Frachtförderantriebseinheit zu generieren, wenn im Fall b) die Sensoren von n-1 der ersten Frachtförderantriebseinheit benachbarter Frachtförderantriebseinheiten der gleichen Reihe wie die erste Fördereinrichtung das Abdecksignal abgeben.

Es ist bevorzugt, dass die Steuerung weiter dazu ausgebildet ist, das Generieren des Abdeckzustands der ersten Frachtförderantriebseinheit zu beenden, wenn
- der Sensor der ersten Frachtförderantriebseinheit das Abdecksignal wieder abgibt oder
- im Fall a) die Sensoren von in Breitenrichtung benachbarten Frachtförderantriebseinheiten der ersten und der zweiten Reihe, von denen wenigstens eine der ersten Frachtförderantriebseinheit benachbart ist, das Abdecksignal abgeben oder
- im Fall b) der Sensor wenigstens zweier hintereinander liegenden Frachtförderantriebseinheiten der gleichen Reihe wie der erste Frachtförderantriebseinheit Abdecksignal abgeben.

Vorzugsweise erfolgt das Beenden im Fall b) dann, wenn der Sensor von n hintereinander liegenden Frachtförderantriebseinheiten, von denen weiter vorzugsweise wenigstens eine Frachtförderantriebseinheit der ersten Frachtförderantriebseinheit benachbart ist, das Abdecksignal abgeben.

Es ist bevorzugt, dass die ULD-Erfassungseinrichtung ein Array von Sensoren einer Eingangs-Frachtfördereinrichtung nahe einer Frachttür des Frachtraums und eine Auswerteinheit umfasst, die dazu ausgebildet ist, anhand von Abdecksignalen der Sensoren der Eingangs-Frachtfördereinrichtung den ULD-Typ zu erfassen.

Gemäß einem weiteren Aspekt schafft die Erfindung ein Frachtladeverfahren zum Beladen eines Frachtraums eines Luftfahrzeuges mit Unit Load Devices (ULD), die eine größere erste oder kleiner zweite vorgegebene Breite und eine vorgegebene Länge (insbesondere eine vorgegebene Mindestlänge) aufweisen, umfassend:
Vorsehen einer ersten Reihe von Frachtförderantriebseinheiten und eine zweite Reihe von Frachtförderantriebseinheiten, die jeweils ein Antriebselement zum Angreifen an der ULD und einen Sensor aufweisen, der dazu ausgebildet ist, das Abdecken der Frachtförderantriebseinheit durch eine ULD zu erfassen und ein das Abdecken anzeigendes Abdecksignal abzugeben, wobei die erste und zweite Reihe in Breitenrichtung derart beabstandet sind, dass ULDs mit der ersten Breite Frachtförderantriebseinheiten der ersten und der zweiten Reihe abdecken und ULDs der zweiten Breite wahlweise Frachtfördereinheiten nur der ersten oder nur der zweiten Reihe abdecken, und wobei die Frachtförderantriebseinheiten in der jeweiligen Reihe mit einem derartigen Abstand in Längenrichtung beabstandet sind, dass beim Fördern der ULDs immer eine Anzahl n in Längenrichtung benachbarte Frachtförderantriebseinheiten durch eine ULD abgedeckt werden, wobei n eine natürliche Zahl größer 1 ist,
Erfassen, ob ein zu förderndes ULD die erste oder die zweite Breite aufweist, und Fördern des ULDs durch den Frachtraum unter Steuern der Frachtförderantriebseinheiten in Abhängigkeit von den durch die Abdecksignalen der Sensoren der Frachtförderantriebseinheiten angegebenen Abdeckzuständen der Frachtförderantriebseinheiten,
Generieren eines Abdeckzustands einer ersten Frachtförderantriebseinheit bei nicht vorhandenen Abdecksignal des Sensors der ersten Frachtförderantriebseinheit, wenn
   a) die ULD-Erfassungseinrichtung eine ULD der ersten Breite erfasst hat und ein Sensor einer der ersten Frachtförderantriebseinheit in Breitenrichtung benachbarten Frachtförderantriebseinheit der benachbarten Reihe das Abdecksignal abgibt, oder
   b) die ULD-Erfassungseinrichtung eine ULD der ersten oder zweiten Breite erfasst hat und der Sensor wenigstens einer der der ersten Frachtförderantriebseinheit benachbarten Frachtförderantriebseinheiten der gleichen Reihe wie die erste Fördereinrichtung das Abdecksignal abgeben, und
Steuern der Frachtförderantriebseinheiten mit dem generierten Abdeckzustand in der gleichen Weise, wie wenn der durch das Abdecksignal erzeugte Abdeckzustand der ersten Fördereinrichtung vorliegt.

Vorzugsweise wird im Fall b) der Abdeckzustand der ersten Frachtförderantriebseinheit generiert, wenn die Sensoren von n-1 der ersten Frachtförderantriebseinheit benachbarter Frachtförderantriebseinheiten der gleichen Reihe wie die erste Fördereinrichtung das Abdecksignal abgeben.

Vorzugsweise umfasst das Frachtladeverfahren den Schritt:
Beenden des Generierens des Abdeckzustands der ersten Frachtförderantriebseinheit, wenn
- der Sensor der ersten Frachtförderantriebseinheit das Abdecksignal wieder abgibt oder
- im Fall a) die Sensoren von in Breitenrichtung benachbarten Frachtförderantriebseinheiten der ersten und der zweiten Reihe, von denen wenigstens eine der ersten Frachtförderantriebseinheit benachbart ist, das Abdecksignal abgeben oder
- im Fall b) die Sensoren wenigstens zweier hintereinander liegenden Frachtförderantriebseinheiten in der gleichen Reihe wie die erste Frachtförderantriebseinheit das Abdecksignal abgeben.

Es ist bevorzugt, im Fall b) das Generieren des Abdecksignals zu beenden, wenn die Sensoren von n hintereinander liegenden Frachtförderantriebseinheiten, von denen weiter vorzugsweise wenigstens eine Frachtförderantriebseinheit der ersten Frachtförderantriebseinheit benachbart ist, das Abdecksignal abgeben
Es ist bevorzugt, dass das Erfassen, ob ein zu förderndes ULD die erste oder die zweite Breite aufweist, durch Erfassen eines ULD-Typs anhand von Abdecksignalen eines Arrays von Sensoren einer Eingangs-Frachtfördereinrichtung erfolgt.

Gemäß einem weiteren Aspekt schafft die Erfindung ein Computerprogramm enthaltend maschinenlesbare Instruktionen, die, wenn in die Steuerung eines Frachtladesystems nach einer der voranstehenden Ausgestaltungen geladen und ausgeführt, das Frachtladesystem veranlassen, das Frachtladeverfahren nach einer der voranstehenden Ausgestaltungen durchzuführen.

Gemäß einem weiteren Aspekt schafft die Erfindung ein Luftfahrzeug, insbesondere Flugzeug, umfassend einen Frachtraum mit einem Frachtladesystem nach einer der voranstehenden Ausgestaltungen.

Einzelheiten zu weiteren möglichen Ausgestaltungen des Frachtladesystems und des Frachtladeverfahrens ergeben sich aus den Literaturstellen [2] bis [7], auf die für weitere Einzelheiten ausdrücklich verwiesen wird.

Bevorzugte Ausgestaltungen der Erfindung sehen eine Kompensation von ausbleibenden Detektionssignalen bei angetriebenen Frachtladesystemen vor. Durch eine einfache Steuerungslösung, die leicht bei bestehenden Systemen wie z.B. der aus [2] bis [7] bekannten Art, z.B. durch ein Software-Update, nachrüstbar ist, lassen sich bisher bei beschädigten, verschmutzten oder zur Detektion ungeeigneten ULDs auftretende Störungen beim automatisierten End- oder Beladevorgang vermeiden oder zumindest deutlich reduzieren.

Ein Ausführungsbeispiel wird im Folgenden anhand der beigefügten Zeichnungen näher erläutert. Darin zeigt:
- Fig. 1: eine schematische Darstellung eines Frachtraums eines Luftfahrzeuges mit einem Ausführungsbeispiel eines Frachtladesystems;

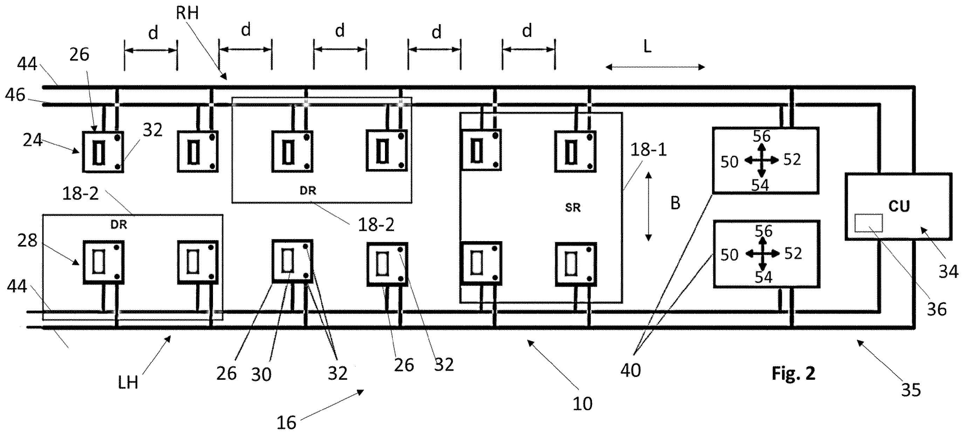

- Fig. 2: eine schematische Block-Darstellung der Basisarchitektur des Frachtladesystems mit einigen mechanischen und elektronischen/elektrischen Komponenten;
- Fig. 3: eine Darstellung wie in Fig. 2, wobei mögliche Kompensationen fehlender Detektionssignale verdeutlicht ist.

In den Figuren ist ein Frachtraum 10 - beispielsweise zumindest ein Teil eines Frachtdecks - eines Luftfahrzeuges 12, hier in Form eines Flugzeuges 14, schematisch dargestellt. Der Frachtraum 10 ist mit einem Frachtladesystem 16 versehen. Das Frachtladesystem 16 ist zum Beladen des Frachtraums 10 mit Unit Load Devices, im Folgenden kurz ULD 18-1, 18-2 genannt, ausgebildet. Als Unit Load Device 18-1, 18-2 kommen eine oder mehrere ULDs 18-1, 18-2 zum Einsatz, wie sie in der Literaturstelle [1] beschrieben und gezeigt sind (zum Beispiel eine oder mehrere ULD des Typs LD1, LD2, LD3, ... LDx). Es wird für weitere Einzelheiten ausdrücklich auf die Literaturstelle [1] verwiesen.

Das Frachtladesystem 16 ist ein modernes Frachtladesystem (englisch: Cargo Loading System, kurz CLS) wie es vom Prinzip her auch aus den Literaturstellen [2] bis [7] beschrieben und gezeigt ist. Derartige moderne Frachtladesysteme 16 (CLS) weisen mindestens (passive) mechanische Teile wie zum Beispiel Walzen- oder Rollen-Spuren mit frei rotierenden Förderrollen, Kugelmatten (Anordnung von räumlich verteilten drehend gelagerten Kugeln) mit frei in allen Richtungen rotierbaren Kugeln, Führungen, Verriegelungen usw. für eine adäquate Bewegung und Verriegelung von ULDs 18-1, 18-2 auf.

Wenn derartige moderne Frachtladesysteme 16, wie bei den dargestellten Ausführungen, auch mit Antriebseinheiten und einem Steuersystem versehen sind, spricht man von angetriebenen Frachtladesystemen (englisch: Powered Cargo Loading Systems, kurz PCLS).

In den Darstellungen sind mögliche passive mechanische Teile wie die freidrehenden Rollen oder Kugeln, Führungen, Verriegelungen usw. zu Übersichtszwecken weggelassen. Wie die Darstellungen zeigen, weist das Frachtladesystem 16 im Bereich einer Frachttür 20 eine Eingangs-Frachtfördereinrichtung 22 auf, mit der die durch die Frachttür 20 zu fördernden ULDs 18-1, 18-2 sowohl in Breitenrichtung B als auch in Längenrichtung L des Frachtraumes 10 bewegbar sind auf.

Weiter weist das Frachtladesystem 16 eine erste Reihe 24 von Frachtförderantriebseinheiten 26, 26a und eine zweite Reihe 28 von Frachtförderantriebseinheiten 26, 26a auf.

Jede Frachtförderantriebseinheit 26, 26a weist jeweils wenigstens ein Antriebselement 30 zum Angreifen an einer Grundplatte der zu fördernden ULDs 18-1, 18-2 zwecks Antreiben einer Bewegung derselben und wenigstens einen Sensor 32 auf.

Das Antriebselement 30 ist beispielsweise eine durch einen Aktor, wie zum Beispiel einem Motor oder dergleichen, drehend angetriebene Rolle oder Walze.

Der Sensor 32 ist dazu ausgebildet, ein Abdecken der jeweiligen Frachtförderantriebseinheit 26, 26a durch eine ULD 18-1, 18-2 zu erfassen und ein Abdecksignal abzugeben. Ein Beispiel für einen derartigen Sensor 32 ist aus der Literaturstelle [7] bekannt.

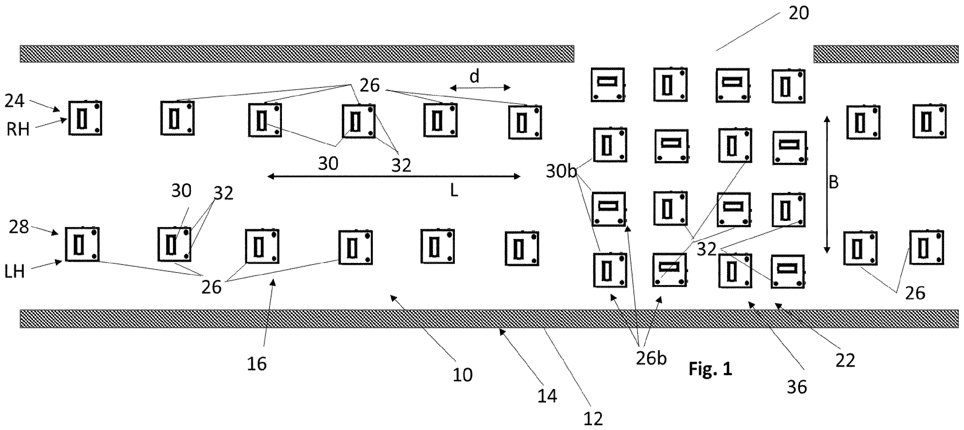

Auch die Eingangs-Frachtfördereinrichtung 22 weist - siehe Fig. 1 - ein Array von Antriebseinheiten 26b auf. Diese Antriebseinheiten 26b weisen jeweils wengistens ein Antriebselement 30b auf, das zum Beispiel als angetriebene Walze ausgebildet ist, und wenigstens einen der Sensoren 32 zum Erfassen des Abdeckens durch eine ULD 18-1, 18-2 auf. Eine erste Gruppe der Antriebseinheiten 26b der Eingangs-Frachtfördereinrichtung 22 ist so ausgerichtet, dass ihr Antriebselement 30b ein Fördern der ULDs in Breitenrichtung B zum Bewegen der ULDs EINWÄRTS durch die Frachttür 20 in das Innere des Frachtraums 10 hinein und in umgekehrter Drehrichtung zum Bewegen der auszuladenden ULDs AUSWÄRTS durch die Frachttür 20 aus dem Inneren des Frachtraums 10 hinaus bewirkt. Die zweite Gruppe von Antriebseinheiten 26b ist - wie die Frachtförderantriebseinheiten 26 - so ausgerichtet, dass die ULDs in Längenrichtung L angetrieben bewegbar sind. Durch die Sensoren 32 der Antriebseinheiten 26b der Eingangs-Frachtfördereinrichtung ist an der Eingangs-Frachtfördereinrichtung 22 ein Array von Sensoren 32 gebildet. Wenngleich dies in Fig. 1 nicht näher dargestellt ist, sind die einzelnen Antriebseinheiten 26b mit Schnittstellen versehen und in vergleichbarer Weise wie die Frachtförderantriebseinheiten 26 an eine Energieversorgungsleitung 44 und einen Datenbus 46 angeschlossen, wie dies im Folgenden anhand des Beispiels der Frachtförderantriebseinheiten 26 noch näher dargelegt wird.

Weiter weist das Frachtladesystem 16 eine Steuerung 34 zum Steuern der Eingangs-Frachtfördereinrichtung 22 und der Frachtförderantriebseinheiten 26 zum zumindest teilweise automatisierten Beladen und Entladen des Frachtraumes 10 auf.

Die Steuerung 34 steuert die Antriebselemente 30, 30b der Eingangs-Frachtfördereinrichtung 22 und der Frachtförderantriebseinheiten 26, 26a in Abhängigkeit von den Abdecksignalen ihrer Sensoren 32. Ein Teil der Steuerung 34 ist dabei als Auswerteeinheit für die Eingangs-Frachtfördereinrichtung 22 dazu ausgebildet, anhand eines Musters und/oder der Anzahl von Abdecksignalen der Sensoren 32 der Eingangs-Frachtfördereinrichtung 22 beim Einfahren einer ULD 18-1, 18-2 deren Typ zu erkennen und somit auch zu erkennen, ob es sich um eine ULD 18-1 mit größerer Breite, die zum Beispiel einen Großteil der Breite des Frachtraumes 10 einnehmen kann, oder um eine ULD 18-2 mit kleinerer Breite, die etwas weniger als die Hälfte der Breite des Frachtraumes 10 einnehmen kann, handelt.

Entsprechend der Abdecksignale der Sensoren 32 der Reihen 24, 28 von Frachtförderantriebseinheiten 26, 26a und der Eingangs-Frachtfördereinrichtung 22 wird die Lage der einzelnen ULDs 18-1, 18-2 in dem Frachtraum 10 durch die Steuerung 34 detektiert, wobei jede ULD 18-1, 18-2 entsprechend bei ihrem Eingang durch die durch die Eingangs-Frachtfördereinrichtung 22 und die Auswerteinheit gebildete ULD-Erfassungseinrichtung 36 hinsichtlich ihres Typs erfasst worden ist. Anhand der gut definierten Frachteinheiten - ULDS 18-1, 18-2 - sind die mechanischen Teile des Frachtladesystems 16 entsprechend ihren Abständen und ihrer Position definiert; die entsprechenden Führungen, Verriegelungen, Antriebselemente 30 sind entsprechend ihrer Lage auf die Handhabung der ULDs 18-1, 18-2 abgestimmt.

Anhand des maximalen ULD-Gewichts - siehe Literaturstelle [1] - werden auch die Antriebskräfte der Antriebseinheiten 26, 26a, 26b (PDU) für eine vorgegebene Fördergeschwindigkeit ausgelegt.

Die Anzahl der jeweils benötigten Frachtförderantriebseinheiten 26, 26a (PDU) hängt von einigen Designkriterien ab:
- Die Grundplatte einer ULD 18-1, 18-2 könnte einige Unebenheiten oder Erhöhungen oder Vertiefungen aufweisen, wo es unmöglich ist, genügend Anpressdruck für den Transport zu erzielen.
- Die Grundplatte einer ULD 18-1, 18-2 könnte nass und glitschig sein, sodass eine Frachtförderantriebseinheit 26, 26a (PDU) alleine nicht dazu fähig ist, die ULD 18-1, 18-2 sauber zu bewegen.
- Es besteht auch der Wunsch, auch dann, wenn eine Frachtförderantriebseinheit 26, 26a nicht funktionsfähig sein sollte, dennoch einen Transport zu ermöglichen.

Aufgrund dessen ist bei dem Frachtladesystem 16 grundsätzlich vorgesehen, dass immer wenigstens zwei (n mit n größer als 1) Frachtförderantriebseinheiten 26 unterhalb einer ULD 18 vorgesehen sind. Entsprechend sind die Abstände d von Frachtförderantriebseinheiten 26 in den Reihen 24, 28 unter Berücksichtigung der gemäß ULD 18-1, 18-2 vorgegeben Längen gewählt, sodass jede ULD 18-1, 18-2 wenigstens n Frachtförderantriebseinheiten 26 abdeckt. Die Definition von ULDs 18-1, 18-2 schließen einen größeren möglichen Bereich von Dimensionen und Gewichten ein. Diese unterschiedlichen ULDs 18-1, 18-2 (LDx) können bei dem dargestellten Frachtladesystem 16 durch zwei allgemeine Ladekonfigurationen gehandhabt werden.

Bei einer Zweireihenladekonfiguration (englisch: Double Row - kurz DR) kann jede Seite des Flugzeuges 14 - rechte Seite RH und linke Seite LH - unabhängig beladen und entladen werden. Die entsprechenden ULD 18-2 haben eine entsprechende kleinere zweite Breite, die nahezu der Hälfte des Frachtdecks des Flugzeugs 14 entspricht.

Größere ULDs 18-2 in Form von größeren Containern oder größeren schweren Paletten brauchen die komplette Breite des Frachtdecks. Aufgrund der großen Abmessung und des großen Gewichts benötigen sie außerdem mehr als zwei Frachtförderantriebseinheiten 26, 26a - PDUs - für ein ordnungsgemäßes Antreiben der Transportbewegung. Sie werden in einer Einreihen-Konfiguration (Englisch Single Row, kurz SR) geladen. Frachtladesysteme 16, die mit entsprechenden Frachtförderantriebseinheiten 26, 26a und der Steuerung 34 zusätzlich zu den passiven mechanischen Teilen wie Rollenspuren, Kugelmatten, Führungen, Verriegelungen usw. versehen sind, werden in einem immer größeren Ausmaß von entsprechenden Frachtunternehmen gefordert.

Ein Kontrollsystem 35 des Frachtladesystems 16 weist neben der beispielsweise durch eine Rechnereinheit realisierten Steuerung 34 folgende Ausrüstung auf:
- ein oder mehrere Mensch-Maschine-Schnittstellen 40, hier beispielweise ausgebildet als Steuerpaneele, die mit Schaltern und/oder Joysticks und/oder Anzeigeeinrichtungen und/oder Touchscreens oder dergleichen versehen sind, um den Transport der ULDs 18-1, 18-2 durch grundlegende Befehle wie zum Beispiel LADEN 50/ENTLADEN 52 und EINWÄRTS 54/AUSWÄRTS 56 zu steuern.
- Die Frachtförderantriebseinheiten 26 zeigen der Steuerung 34 die Erfassung einer Grundplatte einer ULD 18-1, 18-2 an.
- Die Frachtförderantriebseinheiten 26, 26a weisen eine Schnittstelle 42 zum Erhalt von grundsätzlichen Steuerbefehlen wie ANTREIBEN, ANHALTEN, HALTEN, FREIGEBEN auf.

Hierzu sind in den dargestellten Ausführungsformen die beiden Reihen 24, 28 jeweils mit einer eigenen Energieversorgungsleitung 44 und einem eigenen Datenbus 46 versehen. Jede Antriebseinheit 26, 26a, 26b ist mit ihrer Schnittstelle 42 an die zugeordnete Energieversorgungsleitung 44 und den zugeordneten Datenbus 46 angeschlossen. Pro Reihe 24, 28 ist eine eigene Mensch-Maschine-Schnittstelle 40 vorgesehen, die ebenfalls an die Energieversorgungsleitung 44 und den Datenbus 46 angeschlossen ist. Außerdem sind die Energieversorgungsleitungen 44 und die Datenbusse 46 an die zentrale Steuerung 34, beispielsweise ausgebildet als Recheneinheit CU, angeschlossen. Allgemein können die Signale der oben aufgezählten Ausrüstung über diskrete 1/0-Signale oder über eine Datenbusverbindung auf eine zentrale Rechnereinheit (CU), die die Steuerung 34 bildet, übertragen werden. Das Datenbusprotokoll kann beispielsweise eine von üblichen Datenbusprotokollen wie ARINC, AFDX, CAN-Bus, Ethernet sein.

In der Steuerung 34 wird diese Information kombiniert. Basierend auf der Information durch die Mensch-Maschine-Schnittstelle 40 und durch die Frachtförderantriebseinheiten 26 werden entsprechende Antreiben/Stopp- und/oder Halten/Freigeben-Befehle berechnet und werden an die involvierten oder benötigten Frachtförderantriebseinheiten 26 gesendet.

Die einfachste Logik ist, dass ein Antriebsbefehl entsprechend dem an der Mensch-Maschine-Schnittstelle 40 gegebenen LADEN/ENTLADEN-Befehl oder EINWÄRTS/AUSWÄRTS-Befehl zu derjenigen Antriebseinheit 26, 26b geleitet wird, die das Abdecken durch eine Grundplatte eines ULDs 18-1, 18-2 erfasst.

Einfache Verbesserungen dieser Grundlogik können verwendet werden, um die jeweils nächste oder die letzte Frachtförderantriebseinheit 26 (PDU) anzutreiben, selbst wenn diese nicht durch eine ULD 18-1, 18-2 abgedeckt wird.

Jedoch hängen alle diese möglichen Logiken zum Steuern des Beladens oder Entladens der ULDs 18-1, 18-2 von einer zuverlässigen Feststellung eines Abdeckzustandes durch das entsprechende Abdecksignal des Sensors 32 der entsprechenden Frachtförderantriebseinheit 26 wesentlich ab.

Deswegen benötigen die Frachtförderantriebseinheiten 26 Sensoren 32 mit hoher Qualität und hoher Zuverlässigkeit und auch hoher Erfassungsgeschwindigkeit. Zusätzlich sind die Frachtförderantriebseinheiten 26 auch oft mit zwei oder mehr Sensoren 32 versehen.

Jedoch können alle diese Anstrengungen ein ganz einfaches Problem nicht lösen:
- Die ULDs 18-1, 18-2 haben oft dreckige oder schwarze Oberflächen.
- Manchmal gibt es an der Aluminium-Grundplatte eine chemische Reaktion mit Sand, Salz und dergleichen.
- Das Rollelement der Frachtförderantriebseinheit 26 selbst lässt Gummispuren auf der Oberfläche der Grundplatte zurück.
- Zusätzlich kann die Grundplatte einige Kratzer, Vertiefungen oder sonstige Beschädigungen haben.

Diese Probleme reduzieren die Erfassungswahrscheinlichkeit der Sensoren 32 der Frachtförderantriebseinheiten 26 in beträchtlichem Ausmaß. Daher werden derzeit ULDs 18-1, 18-2 oft überprüft und gewartet. Auch nur kleine Beschädigungen können dazu führen, dass die ULDs 18-1, 18-2 bei derzeitigen automatisierten Frachtladesystemen 16 unbrauchbar werden. Sie werden oft frühzeitig ausgetauscht. Außerdem müssen die Grundplatten von ULDs 18-1, 18-2 häufig gereinigt werden.

Auch bei den Sensoren 32 selbst kann es Probleme mit Verschmutzungen an deren Oberfläche geben.

Wird eine ULD 18-1, 18-2 aufgrund der obengenannten Probleme nicht korrekt erkannt, funktionieren die programmierten Steuervorgänge nicht korrekt, sodass häufig Frachtpersonal händisch eingreifen muss.

Die genannten Probleme können schon bei geringen Ursachen zu erheblichen Verspätungen führen. Beispielsweise muss das Gepäck von Passagieren, die bereits früher eingecheckt haben, dann aber beim Aufruf nicht am Gate erschienen sind, vor Abflug wieder ausgeladen werden. Tritt in einem solchen Fall eine der vorerwähnten Fehler auf, führt dies zu weiteren Verzögerungen, die auch recht teuer werden können.

Die vorgenannten Nachteile verhindern auch bessere Steuerlogiken und/oder eine Implementierung von Steuerbegrenzungen aus Sicherheitsgründen.

Die grundsätzlich bekannte Anordnung von Frachtförderantriebseinheiten 26 derart, dass mehr als eine Frachtförderantriebseinheit 26 durch eine ULD 18-1, 18-2 abgedeckt werden und die bekannten Dimensionen und Formen der ULDs 18-1, 18-2 bieten jedoch die Möglichkeit einer logischen Kombination von Sensorerfassungssignalen auf einem höheren zentralen Steuerlogiklevel. Unter Nutzung einer solchen logischen Kombination von Abdecksignalen können die obengenannten - seit Jahren existierenden und bisher ungelösten - Probleme einfach und elegant gelöst werden.

Wie oben beschrieben, wird für einen besseren Transport einer ULD 18-1, 18-2 eine Mehrzahl von Frachtförderantriebseinheiten 26 unter einer ULD 18-1, 18-2 vorgesehen.

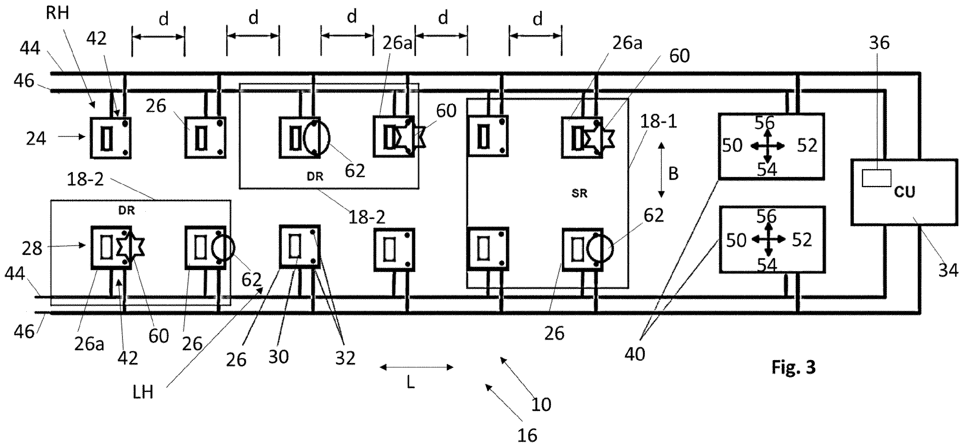

Im Folgenden wird anhand der Fig. 3 erläutert, wie man die obengenannten Probleme von fehlerhaft nicht vorhandenen Abdecksignalen aufgrund dieses Umstandes lösen kann.

Wenn eine ULD 18-1 in Zweireihen-Konfiguration DR entlang einer Flugzeugseite LH oder RH bewegt wird, müssen wenigstens zwei Frachtförderantriebseinheiten 26, 26a (eine nach dem anderen angeordnet, d. h. in der jeweiligen Reihe 24, 28 hintereinander benachbart angeordnet) mindestens einen Abdeckzustand melden. Einer der Abdeckzustände kann zum Zustand "nicht abgedeckt" zurückspringen oder kann aus irgendeinem anderen Grunde, wie zum Beispiel oben unter einfachen Problemen erläutert, fehlen. Dies wird in Fig. 3 bei einer ersten Frachtförderantriebseinheit 26a durch den Stern 60 angezeigt. Wenn nur ein Abdeckzustand (durch eine Frachtförderantriebseinheit 26 vor oder nach der entsprechend kein Abdecksignal sendenden ersten Frachtförderantriebseinheit 26a) auf der gleichen Flugzeug-Seite LH, RH verbleibt (angezeigt durch den Kreis 62 in Fig. 3), kann der Abdeckzustand für die erste Frachtförderantriebseinheit 26 mit dem fehlenden Abdeckzustand durch die Steuerlogik in der gleichen Weise auf "abgedeckt" gesetzt werden, als wenn der Abdeckzustand durch Senden des Abdecksignals gemeldet wird - siehe Stern 60 in Fig. 3. Die Steuerlogik kann die gleichen Antriebsbefehle berechnen wie für den gemeldeten Abdeckzustand. Eine saubere Bewegung der entsprechenden ULD 18-2 kann mit dieser Vorgehensweise einer Kombination eines fehlenden oder verlorenen Abdecksignals sichergestellt werden.

Wenn eine ULD 18-2 in Einreihen-Konfiguration SR mit entsprechend größerer erster Breite entlang beiden Flugzeugseiten LH und RH bewegt wird, müssen mindestens zwei Frachtförderantriebseinheiten 26, die nebeneinander in der ersten Reihe 24 und in der zweiten Reihe 28 liegen einen Abdeckzustand "abgedeckt" melden. Ein Abdeckzustand kann auf "nicht abgedeckt" zurückspringen oder aus irgendeinem anderen Grunde fehlen, siehe oben. Dies wird in Fig. 3 bei einer ersten Frachtförderantriebseinheit 26a durch den Stern 60 angezeigt. Wenn nur ein Abdeckzustand "abgedeckt" - zum Beispiel durch eine benachbarte Frachtförderantriebseinheit 26 auf der anderen Seite, d. h. in der anderen Reihe - zu der entsprechenden ersten Frachtförderantriebseinheit 26 verbleibt - das Verbleiben wird durch den Kreis 62 in Fig. 3 angezeigt - kann der Abdeckzustand für die erste Frachtförderantriebseinheit 26a mit dem fehlenden Abdecksignal auf der gegenüberliegenden Seite durch die Steuerlogik in der gleichen Weise auf "abgedeckt" gesetzt werden, als wenn der Abdeckzustand durch das Abdecksignal gemeldet würde. Der entsprechende Zustand ist durch den Stern 60 in Fig. 3 angezeigt. Die Steuerlogik kann die gleichen Antriebsbefehle wie für den mit dem Abdecksignal gemeldeten Abdeckzustand "abgedeckt" berechnen. Eine saubere Bewegung der entsprechenden ULD 18-1 kann mit dieser Intension eine Kompensation des fehlenden oder verlorenen Abdecksignals sichergesellt werden.

In beiden Fällen - DR-Konfiguration oder SR-Konfiguration - wird die Kompensation des fehlenden oder verlorenen Abdecksignals wieder gelöscht, wenn die dadurch betroffene Frachtförderantriebseinheit 26 - erste Frachtförderantriebseinheit - wieder das Abdecksignal sendet.

Die Kombination des fehlenden oder verlorenen Abdecksignals wird ebenfalls für die betroffene erste Frachtförderantriebseinheit 26a bei der Zweireihen-Konfiguration DR wieder gelöscht, wenn mindestens zwei Frachtförderantriebseinheiten 26 hintereinander wieder bedeckt sind.

Bei der Einzelreihen-Konfiguration SR wird die Kompensation des fehlenden oder verlorenen Abdecksignals für die betroffene erste Frachtförderantriebseinheit 26a wieder gelöscht, wenn zwei nebeneinander liegende Frachtförderantriebseinheiten 26 wieder das Abdecksignal senden.

Diese zusätzliche Logik kann zu bereits bestehenden Steuersystemen hinzugefügt werden. Dies kann durch eine Codemodifikation, zum Beispiel durch ein Update einer Software, erfolgen. Normalerweise werden Steuersysteme zum Beispiel durch Software - wie zum Beispiel Computerprogramme, die auf Mikrocontrollern läuft, Hardware-Signalkombinationen, VHDL (Very High Speed Integrated Circuit-Hardware Description Language) auf FPGA (Field Programmable Gate Array) realisiert.

Die hier dargestellten Verbesserungen von Frachtladesystem 16 und entsprechend damit durchführbaren Frachtladevorgängen basieren auf bereits installierten Ausrüstungen und brauchen keine zusätzlichen Komponenten. Die definierte Konfiguration der Anordnung von Frachtförderantriebseinheiten 26 und die Ladekonfiguration ist die Basis für eine logische Kombination von vorliegenden Abdecksignalen.

Normalerweise nutzt ein Steuersystem für ein Frachtladesystem 16 eine Software, die alle grundlegenden Informationen kombiniert. Das Steuersystem evaluiert die vorliegenden Antriebsbefehle, die durch irgendeine Mensch-Maschine-Schnittstelle 40 eingegeben worden sind, und bestimmt die benötigten Frachtförderantriebseinheiten 26 für einen Transport der entsprechenden ULDs 18.

Die oben beschriebene zusätzliche Logik kann der grundsätzlichen Logik sehr einfach zugefügt werden. Es gibt praktisch keine Nachteile.

Jedoch ist die Verbesserung des Transports von ULDs sehr signifikant. Jeder Fehlkonstellation oder schlechten oder beschädigten Oberfläche einer ULD-Grundplatte oder verschmutzen Grundplatten, Sensorgläsern oder anderen Umständen, die die Detektionsrate reduzieren, kann durch diese einfache Logikerweiterung begegnet werden.

Bei einer weiteren Ausgestaltung wird die für die Zweireihenkonfiguration DR beschriebene Kompensationslogik auch bei einer Einreihenkonfiguration SR verwendet.

Es sind somit ein Frachtladesystem (16) und ein Frachtladeverfahren zum zumindest teilweise automatisierten Beladen eines Frachtraums (10) eines Luftfahrzeugs (12) mit Unit Load Devices (ULD) (18-1, 18-2) beschrieben worden. Dabei werden Antriebselemente (30) von Frachtförderantriebseinheiten (26, 26a) in Abhängigkeit von Abdecksignalen von eine Abdeckung der Frachtförderantriebseinheit (26, 26a) erfassenden Sensoren (32) gesteuert. Ein fehlendes oder verloren gegangenes Abdecksignal einer ersten Frachtförderantriebseinheit (26a) wird durch eine Steuerlogik dadurch kompensiert, dass ein Abdecksignal wenigstens einer benachbarten Frachtförderantriebseinheit (26), die durch eine genormte ULD (18-1, 18-2) zusammen mit der ersten Frachtfördereinheit (26a) abgedeckt sein sollte, abgefragt wird und bei Vorhandensein eines solchen Abdecksignals eines benachbarten Sensors (32) der Abdeckzustand der ersten Frachtförderantriebseinheit (26a) auf "abgedeckt" eingestellt wird.

### Bezugszeichenliste:

- 10: Frachtraum
- 12: Luftfahrzeug
- 14: Flugzeug
- 16: Frachtladesystem
- 18-1: ULD (Unit Load Device - erste Breite)
- 18-2: ULD (Unit Load Device - zweite Breite)
- 20: Frachttür
- 22: Eingangs-Frachtfördereinrichtung
- 24: erste Reihe
- 26: Frachtförderantriebseinheiten
- 26a: erste Frachtförderantriebseinheit (mit fehlendem oder verlorenen Abdecksignal)
- 26b: Antriebseinheit (der Eingangs-Frachtfördereinrichtung)
- 28: zweite Reihe
- 30: Antriebselement
- 30b: Antriebselement (der Eingangs-Frachtfördereinrichtung)
- 32: Sensor
- 34: Steuerung
- 35: Kontrollsystem
- 36: ULD-Erfassungseinrichtung
- 40: Mensch-Maschine-Schnittstelle
- 42: Schnittstelle
- 44: Energieversorgungsleitung
- 46: Datenbus
- 50: Laden
- 52: Entladen
- 54: Einwärts
- 56: Auswärts
- 60: fehlendes Abdecksignal (führt zu durch Steuerung kompensiertem Abdeckzustand)
- 62: Abdeckzustand gemeldet
- B: Breitenrichtung
- d: Abstand
- L: Längenrichtung
- LH: linke Seite des Frachtraums
- RH: rechte Seite des Frachtraums

## Patentansprüche

1. Frachtladesystem (16) zum Beladen eines Frachtraums (10) eines Luftfahrzeugs (12) mit Unit Load Devices, ULD (18-1, 18-2), die eine größere erste oder kleinere zweite vorgegebene Breite und eine vorgegebene Länge aufweisen, wobei das Frachtladesystem (16) umfasst:
eine erste Reihe (24) von Frachtförderantriebseinheiten (26, 26a) und eine zweite Reihe (28) von Frachtförderantriebseinheiten (26, 26a), wobei die Frachtförderantriebseinheiten (26, 26a) jeweils ein Antriebselement (30) zum Angreifen an der ULD (18-1, 18-2) zwecks Antreibens einer Bewegung der ULD (18-1, 18-2) und einen Sensor (32) aufweisen, der dazu ausgebildet ist, das Abdecken der Frachtförderantriebseinheit (26) durch eine ULD (18-1, 18-2) zu erfassen und ein das Abdecken anzeigendes Abdecksignal abzugeben, wobei die erste (24) und die zweite Reihe (28) derart in Breitenrichtung B beabstandet sind, dass ULDs (18-1) mit der ersten Breite Frachtförderantriebseinheiten (26) der ersten (24) und der zweiten Reihe (28) zum Antreiben durch diese abdecken und ULDs (18-2) mit der zweiten Breite Frachtförderantriebseinheiten (26) nur einer der ersten (24) und der zweiten Reihe (28) zum Antreiben durch diese abdecken, und wobei die Frachtförderantriebseinheiten (26, 26a) in der jeweiligen Reihe mit einem derartigen Abstand (d) in Längenrichtung L beabstandet sind, dass beim Fördern der ULDs (18-1, 18-2) immer eine Anzahl n in Längenrichtung L benachbarte Frachtförderantriebseinheiten (26, 26a) durch eine ULD (18-1, 18-2) abgedeckt werden, wobei n eine natürliche Zahl größer 1 ist,
eine ULD-Erfassungseinrichtung (36) zum Erfassen, ob die ULD (18-1, 18-2) die erste oder die zweite vorgegebene Breite aufweist,
und eine Steuerung (34), die dazu ausgebildet ist, die Frachtförderantriebseinheiten (26, 26a) abhängig von den durch die Abdecksignalen der Sensoren (32) der Frachtförderantriebseinheiten (26) angegebenen Abdeckzuständen der Frachtförderantriebseinheiten (26) zu steuern, **dadurch gekennzeichnet,**
**dass** die Steuerung (34) dazu ausgebildet ist,
bei einem nicht vorhandenen Abdecksignal eines Sensors (32) einer ersten Frachtförderantriebseinheit (26a) einen Abdeckzustand der ersten Frachtförderantriebseinheit (26a) durch die Steuerung (34) zu generieren, wenn
a) die ULD-Erfassungseinrichtung (36) eine ULD (18-1) der ersten Breite erfasst hat und
ein Sensor (32) einer der ersten Frachtförderantriebseinheit (26a) in Breitenrichtung (B) benachbarten Frachtförderantriebseinheit (26) der benachbarten Reihe das Abdecksignal abgibt, oder
b) die ULD-Erfassungseinrichtung (36) eine ULD (18-1, 18-2) der ersten oder zweiten Breite erfasst hat und der Sensor (32) wenigstens einer der der ersten Frachtförderantriebseinheit (26a) benachbarten Frachtförderantriebseinheiten (26) der gleichen Reihe wie die erste Fördereinrichtung (26a) das Abdecksignal abgibt, und
das Steuern der Frachtförderantriebseinheiten (26) mit dem durch die Steuerung (34) generierten Abdeckzustand in der gleichen Weise durchzuführen, wie wenn der durch das Abdecksignal erzeugte Abdeckzustand der ersten Fördereinrichtung (26a) vorliegt.

2. Frachtladesystem (16) nach Anspruch 1, **dadurch gekennzeichnet,**
**dass** die Steuerung (34) weiter dazu ausgebildet ist, das Generieren des Abdeckzustands der ersten Frachtförderantriebseinheit (26a) zu beenden, wenn
2.1 der Sensor (32) der ersten Frachtförderantriebseinheit (26a) das Abdecksignal wieder abgibt oder
2.2 im Fall a) die Sensoren (32) von in Breitenrichtung (B) benachbarten Frachtförderantriebseinheiten (26) der ersten (24) und der zweiten Reihe (28), von denen wenigstens eine der ersten Frachtförderantriebseinheit (26a) benachbart ist, das Abdecksignal abgeben, oder
2.3 im Fall b) der Sensor (32) wenigstens zweier hintereinander liegenden Frachtförderantriebseinheiten (26) in der gleichen Reihe wie die ersten Frachtförderantriebseinheit (26a) das Abdecksignal abgeben.

3. Frachtladesystem (16) nach einem der voranstehenden Ansprüche, **dadurch gekennzeichnet,**
**dass** die Steuerung (34) dazu ausgebildet ist,
3.1 bei einem nicht vorhandenen Abdecksignal eines Sensors (32) der ersten Frachtförderantriebseinheit (26a) den Abdeckzustand der ersten Frachtförderantriebseinheit (26a) zu generieren, wenn im Fall b) die Sensoren (32) von n-1 der ersten Frachtförderantriebseinheit (26a) benachbarter Frachtförderantriebseinheiten (26) der gleichen Reihe wie die erste Fördereinrichtung (26a) das Abdecksignal abgeben und/oder
3.2 im Fall b) das Generieren des Abdecksignals zu beenden, wenn die Sensoren (32) von n hintereinander liegenden Frachtförderantriebseinheiten (26), von denen weiter vorzugsweise wenigstens eine Frachtförderantriebseinheit (26) der ersten Frachtförderantriebseinheit (26a) benachbart ist, das Abdecksignal abgeben.

4. Frachtladesystem (16) nach einem der voranstehenden Ansprüche, **dadurch gekennzeichnet,**
**dass** die ULD-Erfassungseinrichtung (36) ein Array von Sensoren (32) einer Eingangs-Frachtfördereinrichtung (22) nahe einer Frachttür (20) des Frachtraums (10) und eine Auswerteinheit umfasst, die dazu ausgebildet ist, anhand von Abdecksignalen der Sensoren (32) der Eingangs-Frachtfördereinrichtung (22) den ULD-Typ zu erfassen.

5. Frachtladeverfahren zum Beladen eines Frachtraums (10) eines Luftfahrzeuges mit Unit Load Devices, ULD (18-1, 18-2), die eine größere erste oder kleiner zweite vorgegebene Breite und eine vorgegebene Länge aufweisen, umfassend:
Vorsehen einer ersten Reihe (24) von Frachtförderantriebseinheiten (26, 26a) und eine zweite Reihe (28) von Frachtförderantriebseinheiten (26, 26a), die jeweils ein Antriebselement (30) zum Angreifen an der ULD (18) und einen Sensor (32) aufweisen, der dazu ausgebildet ist, das Abdecken der Frachtförderantriebseinheit (26, 26a) durch eine ULD (18-1, 18-2) zu erfassen und ein das Abdecken anzeigendes Abdecksignal abzugeben, wobei die erste (24) und zweite Reihe (28) in Breitenrichtung (B) derart beabstandet sind, dass ULDs (18-1) mit der ersten Breite Frachtförderantriebseinheiten (26, 26a) der ersten (24) und der zweiten Reihe (26) abdecken und ULDs (18-2) der zweiten Breite wahlweise Frachtförderantriebseinheiten (26, 26a) nur der ersten (24) oder nur der zweiten Reihe (28) abdecken, und wobei die Frachtförderantriebseinheiten (26, 26a) in der jeweiligen Reihe mit einem derartigen Abstand (d) in Längenrichtung L beabstandet sind, dass beim Fördern der ULDs (18-1, 18-2) immer eine Anzahl n in Längenrichtung L benachbarte Frachtförderantriebseinheiten (26, 26a) durch eine ULD (18-1, 18-2) abgedeckt werden, wobei n eine natürliche Zahl größer 1 ist,
Erfassen, ob eine zu fördernde ULD (18-1, 18-2) die erste oder die zweite Breite aufweist, und Fördern der ULDs (18-1, 18-2) durch den Frachtraum (10) unter Steuern der Frachtförderantriebseinheiten (26) in Abhängigkeit von den durch die Abdecksignale der Sensoren (32) der Frachtförderantriebseinheiten (26) angegebenen Abdeckzuständen der Frachtförderantriebseinheiten (26, 26a),
Generieren eines Abdeckzustands einer ersten Frachtförderantriebseinheit (26a) bei nicht vorhandenen Abdecksignal des Sensors (32) der ersten Frachtförderantriebseinheit (26a), wenn
a) die ULD-Erfassungseinrichtung (36) eine ULD (18-1) der ersten Breite erfasst hat und
ein Sensor (32) einer der ersten Frachtförderantriebseinheit (26a) in Breitenrichtung (B) benachbarten Frachtförderantriebseinheit (26) der benachbarten Reihe das Abdecksignal abgibt, oder
b) die ULD-Erfassungseinrichtung (36) eine ULD (18-1, 18-2) der ersten oder zweiten Breite erfasst hat und der Sensor (32) wenigstens einer der der ersten Frachtförderantriebseinheit (26a) benachbarten Frachtförderantriebseinheiten (26) der gleichen Reihe wie die erste Frachtförderantriebseinrichtung (26a) das Abdecksignal abgibt, und
Steuern der Frachtförderantriebseinheiten (26, 26a) mit dem generierten Abdeckzustand in der gleichen Weise, wie wenn der durch das Abdecksignal erzeugte Abdeckzustand der ersten Frachtförderantriebseinrichtung (26a) vorliegt.

6. Frachtladeverfahren nach Anspruch 5, **gekennzeichnet durch** Beenden des Generierens des Abdeckzustands der ersten Frachtförderantriebseinheit (26a), wenn
6.1 der Sensor (32) der ersten Frachtförderantriebseinheit (26a) das Abdecksignal wieder abgibt oder
6.2 im Fall a) die Sensoren (32) von in Breitenrichtung (B) benachbarten Frachtförderantriebseinheiten (26) der ersten und der zweiten Reihe, von denen wenigstens eine der ersten Frachtförderantriebseinheit (26a) benachbart ist, das Abdecksignal abgeben oder
6.3 im Fall b) die Sensoren (32) wenigstens zweier hintereinander liegenden Frachtförderantriebseinheiten (26) der gleichen Reihe wie die erste Frachtförderantriebseinheit (26a) das Abdecksignal abgeben.

7. Frachtladeverfahren nach einem der Ansprüche 4 oder 5, **dadurch gekennzeichnet**,
7.1 dass im Fall b) der Abdeckzustand der ersten Frachtförderantriebseinheit (26a) generiert wird, wenn die Sensoren von n-1 der ersten Frachtförderantriebseinheit (26a) benachbarter Frachtförderantriebseinheiten (26) der gleichen Reihe wie die erste Fördereinrichtung (26a) das Abdecksignal abgeben, und/oder
7.2 dass im Fall b) das Generieren beendet wird, wenn die Sensoren (32) von n hintereinander liegenden Frachtförderantriebseinheiten (26), von denen vorzugsweise wenigstens eine der ersten Frachtförderantriebseinheit (26a) benachbart ist, das Abdecksignal abgeben.

8. Frachtladeverfahren nach einem der Ansprüche 5 bis 7, **dadurch gekennzeichnet, dass** das Erfassen, ob ein zu förderndes ULD (18-1, 18-2) die erste oder die zweite Breite aufweist, durch Erfassen eines ULD-Typs anhand von Abdecksignalen eines Arrays von Sensoren (32) einer Eingangs-Frachtfördereinrichtung (22) erfolgt.

9. Computerprogramm enthaltend maschinenlesbare Instruktionen, die, wenn in die Steuerung (34) eines Frachtladesystems (16) nach einem der Ansprüche 1 bis 4 geladen und ausgeführt, das Frachtladesystem (16) veranlassen, das Frachtladeverfahren nach einem der Ansprüche 5 bis 8 durchzuführen.

10. Luftfahrzeug (12), umfassend einen Frachtraum mit einem Frachtladesystem (16) nach einem der Ansprüche 1 bis 4.

## Claims

1. A cargo loading system (16) for loading a cargo hold (10) of an aircraft (12) with Unit Load Devices (ULDs) (18-1, 18-2) which have a larger first or smaller second predetermined width and a predetermined length, wherein the cargo loading system (16) comprises:
a first row (24) of cargo handling power drive units (26, 26a) and a second row (28) of cargo handling power drive units (26, 26a), wherein the cargo handling power drive units (26, 26a) each have a drive element (30) for acting on the ULD (18-1, 18-2) for the purpose of driving a movement of the ULD (18-1, 18-2), and a sensor (32) which is designed to detect that the cargo handling power drive unit (26) is covered by a ULD (18-1, 18-2) and output a coverage signal indicating the coverage, wherein the first (24) and the second row (28) are spaced apart from each other in the width direction B such that ULDs (18-1) with the first width cover cargo handling power drive units (26) of the first (24) and the second row (28) for the purpose of being driven by them and ULDs (18-2) with the second width cover cargo handling power drive units (26) of just one of the first (24) and the second row (28) for the purpose of being driven by them, and wherein the cargo handling power drive units (26, 26a) are spaced apart in the respective row by a spacing (d) in a longitudinal direction L such that, when the ULDs (18-1, 18-2) are being conveyed, a number n of cargo handling power drive units (26, 26a) adjacent in a longitudinal direction L are always covered by a ULD (18-1, 18-2), wherein n is a natural number greater than 1, a ULD detection system (36) for detecting whether the ULD (18-1, 18-2) has the first or the second predetermined width, and a control system (34) which is designed to control the cargo handling power drive units (26, 26a) depending on the coverage statuses, specified by the coverage signals of the sensors (32) of the cargo handling power drive units (26), of the cargo handling power drive units (26),
**characterized in that**
the control system (34) is designed to generate a coverage status of the first cargo handling power drive unit (26a) by the control system (34) in the case of no existing coverage signal of a sensor (32) of a first cargo handling power drive unit (26a) when
a) the ULD detection device (36) has detected a ULD (18-1) of the first width and a sensor (32) of a cargo handling power drive unit (26), of the adjacent row, adjacent in the width direction (B) to the first cargo handling power drive unit (26a) outputs the coverage signal, or
b) the ULD detection device (36) has detected a ULD (18-1, 18-2) of the first or second width and the sensor (32) of at least one of the cargo handling power drive units (26), of the same row as the first handling device (26a), adjacent to the first cargo handling power drive unit (26a) outputs the coverage signal,
and to carry out the controlling of the cargo handling power drive units (26) with the coverage status generated by the control system (34) in the same way as when the coverage status, generated by the coverage signal, of the first handling device (26a) is present.

2. The cargo loading system (16) as claimed in claim 1, **characterized in that** the control system (34) is further designed to end the generation of the coverage status of the first cargo handling power drive unit (26a) when
2.1 the sensor (32) of the first cargo handling power drive unit (26a) outputs the coverage signal again, or
2.2 in case a) the sensors (32) of cargo handling power drive units (26), adjacent in the width direction (B), of the first (24) and the second row (28), at least one of which is adjacent to the first cargo handling power drive unit (26a), output the coverage signal, or
2.3 in case b) the sensor (32) of at least two cargo handling power drive units (26), situated one behind the other, of the same row as the first cargo handling power drive unit (26a) outputs the coverage signal.

3. The cargo loading system (16) as claimed in one of the preceding claims,
**characterized in that**
the control system (34) is designed
3.1 to generate the coverage status of the first cargo handling power drive unit (26a) in the case of no existing coverage signal of a sensor (32) of the first cargo handling power drive unit (26a) when in case b) the sensors (32) of n-1 of the first cargo handling power drive units (26), adjacent to the first cargo handling power drive unit (26a), of the same row as the first handling device (26a) output the coverage signal, and/or
3.2 in case b) to end the generation of the coverage signal when the sensors (32) of n cargo handling power drive units (26) situated one behind the other, more preferably at least one cargo handling power drive unit (26) of which is adjacent to the first cargo handling power drive unit (26a), output the coverage signal.

4. The cargo loading system (16) as claimed in one of the preceding claims, **characterized in that**
the ULD detection device (36) comprises an array of sensors (32) of an entrance cargo handling device (22) close to a cargo door (20) of the cargo hold (10), and an evaluation unit which is designed to detect the ULD type with the aid of coverage signals of the sensors (32) of the entrance cargo handling device (22).

5. A cargo loading method for loading a cargo hold (10) of an aircraft with Unit Load Devices, ULDs (18-1, 18-2) which have a larger first or smaller second predetermined width and a predetermined length, comprising:
Providing a first row (24) of cargo handling power drive units (26, 26a) and a second row (28) of cargo handling power drive units (26, 26a) which each have a drive element (30) for acting on the ULD (18) and a sensor (32) which is designed to detect the coverage of the cargo handling power drive unit (26, 26a) by a ULD (18-1, 18-2) and to output a coverage signal indicating the coverage, wherein the first (24) and second row (28) are spaced apart from each other in the width direction (B) such that ULDs (18-1) with the first width cover cargo handling power drive units (26, 26a) of the first (24) and the second row (26), and ULDs (18-2) of the second width optionally cover cargo handling power drive units (26, 26a) only of the first (24) or only of the second row (28), and wherein the cargo handling power drive units (26, 26a) in the respective row are spaced apart in a longitudinal direction L with a spacing (d) such that, when the ULDs (18-1, 18-2) are being conveyed, a number n of cargo handling power drive units (26, 26a) adjacent in a longitudinal direction L are always covered by a ULD (18-1, 18-2), wherein n is a natural number greater than 1,
Detecting whether a ULD (18-1, 18-2) to be conveyed has the first or the second width, and conveying the ULDs (18-1, 18-2) through the cargo hold (10) with control of the cargo handling power drive units (26) depending on the coverage statuses, specified by the coverage signals of the sensors (32) of the cargo handling power drive units (26), of the cargo handling power drive units (26, 26a),
Generating a coverage status of a first cargo handling power drive unit (26a) in the case of no existing coverage signal of the sensor (32) of the first cargo handling power drive unit (26a) when
a) the ULD detection device (36) has detected a ULD (18-1) of the first width and a sensor (32) of a cargo handling power drive unit (26), adjacent in the width direction (B) to the first cargo handling power drive unit (26a), of the adjacent row outputs the coverage signal, or
b) the ULD detection device (36) has detected a ULD (18-1, 18-2) of the first or second width and the sensor (32) of at least one of the cargo handling power drive units (26), adjacent to the first cargo handling power drive unit (26a), of the same row as the first cargo handling power drive device (26a), outputs the coverage signal,
and to carry out the controlling of the cargo handling power drive units (26, 26a) with the coverage status generated in the same way as when the coverage status, generated by the coverage signal, of the first cargo handling power drive device (26a) is present.

6. The cargo loading method as claimed in claim 5, **characterized by**
ending the generation of the coverage status of the first cargo handling power drive unit (26a) when
6.1 the sensor (32) of the first cargo handling power drive unit (26a) outputs the coverage signal again, or
6.2 in case a) the sensors (32) of cargo handling power drive units (26), adjacent in the width direction (B), of the first and the second row, at least one of which is adjacent to the first cargo handling power drive unit (26a), output the coverage signal, or
6.3 in case b) the sensors (32) of at least two cargo handling power drive units (26), situated one behind the other, of the same row as the first cargo handling power drive unit (26a) output the coverage signal.

7. The cargo loading method as claimed in one of the claims 4 or 5, **characterized in that** 7.1 the coverage status of the first cargo handling power drive unit (26a) is generated in case b) when the sensors of n-1 of the cargo handling power drive units (26), adjacent to the first cargo handling power drive unit (26a), of the same row as the first handling device (26a) output the coverage signal, and/or
7.2 in case b) the generation is ended when the sensors (32) of n cargo handling power drive units (26), situated one behind the other, preferably at least one of which is adjacent to the first cargo handling power drive unit (26a), output the coverage signal.

8. The cargo loading method as claimed in one of the claims 5 to 7, **characterized in that** the detection of whether a ULD (18-1, 18-2) to be conveyed has the first or the second width takes place by detecting a ULD type with the aid of coverage signals of an array of sensors (32) of an entrance cargo handling device (22).

9. A computer program containing machine-readable instructions which, when loaded into and executed by the control system (34) of a cargo loading system (16) as claimed in one of the claims 1 to 4, cause the cargo loading system (16) to carry out the cargo loading method as claimed in one of the claims 5 to 8.

10. An aircraft (12) comprising a cargo hold with a cargo loading system (16) as claimed in one of the claims 1 to 4.

## Revendications

1. Système (16) de chargement de fret pour charger dans une soute à fret (10) d'un aéronef (12) des dispositifs de chargement d'unité, ULD, (18-1, 18-2) ayant une première largeur prédéterminée plus grande ou une deuxième largeur prédéterminée plus petite et une longueur prédéterminée, le système (16) de chargement de fret comprenant :
une première rangée (24) d'unités (26, 26a) d'entraînement de convoyeur de fret et une deuxième rangée (28) d'unités (26, 26a) d'entraînement de convoyeur de fret, les unités (26, 26a) d'entraînement de convoyeur de fret comprenant chacune un élément d'entraînement (30) destiné à venir en engagement avec l'ULD (18-1, 18-2) de façon à entraîner un mouvement de l'ULD (18-1, 18-2) et un capteur (32) qui est conçu de façon à détecter le recouvrement de l'unité (26) d'entraînement de convoyeur de fret par un ULD (18-1, 18-2) et à émettre un signal de recouvrement indiquant le recouvrement, la première (24) et la deuxième (28) rangées étant espacées dans le sens de la largeur B de telle sorte, en ce que des ULD (18-1) de la première largeur recouvrent des unités (26) d'entraînement de convoyeur de fret de la première (24) et de la deuxième (28) rangées de façon à être entraînées par celles-ci, et des ULD (18-2) de la deuxième largeur recouvrent des unités (26) d'entraînement de convoyeur de fret de l'une seulement de la première (24) et de la deuxième (28) rangées de façon à être entraînées par celles-ci, les unités (26, 26a) d'entraînement de convoyeur de fret dans la rangée respective étant espacées d'une distance (d) dans la direction longitudinale L telle que, lors du transport des ULD (18-1, 18-2), un nombre n d'unités (26, 26a) d'entraînement de convoyeur de fret voisines dans la direction longitudinale L sont toujours recouvertes par un ULD (18-1, 18-2), n étant un nombre naturel supérieur à 1,
un dispositif (36) de détection d'ULD pour détecter si l'ULD (18-1, 18-2) a la première ou la deuxième largeur prédéterminée,
et un dispositif de commande (34) qui est conçu pour commander les unités (26, 26a) d'entraînement de convoyeur de fret en fonction des états de recouvrement des unités (26) d'entraînement de convoyeur de fret indiqués par les signaux de recouvrement des capteurs (32) des unités (26) d'entraînement de convoyeur de fret, **caractérisé en ce que**
le dispositif de commande (34) est conçu pour,
en l'absence d'un signal de recouvrement en provenance d'un capteur (32) d'une première unité (26a) d'entraînement de convoyeur de fret, générer un état de recouvrement de la première unité (26a) d'entraînement de convoyeur de fret par le dispositif de commande (34), lorsque
a) le dispositif de détection ULD (36) a détecté un ULD (18-1) de la première largeur, et que
un capteur (32) d'une unité (26) d'entraînement de convoyeur de fret de la rangée adjacente, voisine de la première unité (26a) d'entraînement de convoyeur de fret dans le sens de la largeur (B), émet le signal de recouvrement, ou
b) le dispositif (36) de détection d'ULD a détecté un ULD (18-1, 18-2) de la première ou de la deuxième largeur et le capteur (32) d'au moins une des unités (26) d'entraînement de convoyeur de fret adjacente à la première unité (26a) d'entraînement de convoyeur de fret de la même rangée que le premier convoyeur (26a) émet le signal de recouvrement, et
effectuer la commande des unités (26) d'entraînement de convoyeur de fret avec l'état de recouvrement généré par le dispositif de commande (34) de la même manière que lorsque l'état de recouvrement généré par le signal de recouvrement est présent sur le premier convoyeur (26a).

2. Système (16) de chargement de fret selon la revendication 1, **caractérisé**
**en ce que** le dispositif de commande (34) est en outre conçu de façon à arrêter de générer l'état de recouvrement de la première unité (26a) d'entraînement de convoyeur de fret lorsque
2.1 le capteur (32) de la première unité d'entraînement du convoyeur de fret (26a) délivre à nouveau le signal de recouvrement, ou que
2.2 dans le cas a), les capteurs (32) d'unités (26) d'entraînement de convoyeur de fret qui sont adjacentes dans le sens de la largeur (B) de la première (24) et de la deuxième rangées (28), dont au moins une est voisine de la première unité (26a) d'entraînement de convoyeur de fret, émettent le signal de recouvrement, ou
2.3 dans le cas b), les capteurs (32) d'au moins deux unités (26) d'entraînement de convoyeur de fret situées l'une derrière l'autre dans la même rangée que la première unité d'entraînement du convoyeur de fret (26a) émettent le signal de recouvrement.

3. Système (16) de chargement de fret selon l'une des revendications précédentes, **caractérisé**
**en ce que** le dispositif de commande (34) est conçu de façon
3.1 à générer, en l'absence de signal de recouvrement en provenance d'un capteur (32) de la première unité (26a) d'entraînement de convoyeur de fret, l'état de recouvrement de la première unité (26a) d'entraînement de convoyeur de fret lorsque, dans le cas b), les capteurs (32) de n-1 unités (26) d'entraînement de convoyeur de fret voisines de la première unité (26a) d'entraînement de convoyeur de fret de la même rangée que le premier dispositif de convoyeur (26a) émettent le signal de recouvrement et/ou
3.2 dans le cas b), à arrêter de générer le signal de recouvrement lorsque les capteurs (32) de n unités (26) d'entraînement de convoyeur de fret situées les unes derrière les autres, dont de préférence, en outre, au moins une unité (26) d'entraînement de convoyeur de fret qui est voisine de la première unité (26a) d'entraînement de convoyeur de fret, émettent le signal de recouvrement.

4. Système (16) de chargement de fret selon l'une des revendications précédentes, **caractérisé**
**en ce que** le dispositif (36) de détection d'ULD comprend un réseau de capteurs (32) d'un dispositif (22) de convoyeur de fret d'entrée à proximité d'une porte de fret (20) de la soute de fret (10) et une unité d'évaluation qui est conçue de façon à détecter le type d'ULD en utilisant des signaux de recouvrement provenant des capteurs (32) du dispositif (22) de convoyeur de fret d'entrée.

5. Procédé de chargement de fret pour charger une soute à fret (10) d'un aéronef avec des dispositifs de chargement unitaires, ULD (18-1, 18-2), qui présentent une première largeur prédéterminée plus grande ou une deuxième largeur prédéterminée plus petite et une longueur prédéterminée, comprenant :
la fourniture d'une première rangée (24) d'unités (26, 26a) d'entraînement de convoyeur de fret et une deuxième rangée (28) d'unités (26, 26a) d'entraînement de convoyeur de fret, chacune ayant un élément d'entraînement (30) pour venir en engagement avec l'ULD (18) et un capteur (32) qui est conçu de façon à détecter le recouvrement de l'unité (26, 26a) d'entraînement de convoyeur de fret par un ULD (18-1, 18-2) et à émettre un signal de recouvrement indiquant le recouvrement, la première (24) et la deuxième (28) rangées étant espacées dans le sens de la largeur (B) de telle sorte que les ULD (18-1) ayant la première largeur puissent entraîner des unités (26, 26a) d'entraînement de convoyeur de fret de la première (24) et de la deuxième rangées (26) et les ULD (18-2) de la deuxième largeur recouvrent sélectivement des unités (26, 26a) d'entraînement de convoyeur de fret de la première (24) ou de la deuxième rangées (28) seulement, et dans lequel les unités (26, 26a) d'entraînement de convoyeur de fret sont espacées dans la rangée respective d'une distance (d) dans la direction longitudinale L telle que, lors du transport des ULD (18-1, 18-2), un nombre n d'unités (26, 26a) d'entraînement de convoyeur de fret voisines dans la direction longitudinale L sont toujours recouvertes par un ULD (18-1, 18-2), n étant un nombre naturel supérieur à 1,
la détection du point de savoir si un ULD (18-1, 18-2) à transporter présente la première ou la deuxième largeur, et le transport des ULD (18-1, 18-2) à travers la soute de fret (10) en commandant les unités (26) d'entraînement de convoyeur de fret en fonction des états de recouvrement des unités (26, 26a) d'entraînement de convoyeur de fret indiqués par les signaux de recouvrement provenant des capteurs (32) des unités (26) d'entraînement de convoyeur de fret,
la génération d'un état de recouvrement d'une première unité (26a) d'entraînement de convoyeur de fret en l'absence de signal de recouvrement en provenance du capteur (32) de la première unité (26a) d'entraînement de convoyeur de fret, lorsque
a) le dispositif de détection d'ULD (36) a détecté un ULD (18-1) de la première largeur et que
un capteur (32) d'une unité (26) d'entraînement de convoyeur de fret de la rangée adjacente, voisine de la première unité (26a) d'entraînement de convoyeur de fret dans le sens de la largeur (B), émet le signal de recouvrement, ou
b) le dispositif de détection d'ULD (36) a détecté un ULD (18-1, 18-2) de la première ou de la deuxième largeurs et le capteur (32) d'au moins l'une des unités (26) d'entraînement de convoyeur de fret adjacentes à la première unité (26a) d'entraînement de convoyeur de fret de la même rangée que la première unité (26a) d'entraînement de convoyeur de fret émet le signal de recouvrement, et
la commande des unités (26, 26a) d'entraînement de convoyeur de fret avec l'état de recouvrement généré de la même manière que lorsque l'état de recouvrement généré par le signal de recouvrement est présent dans le premier dispositif (26a) d'entraînement de convoyeur de fret.

6. Procédé de chargement de fret selon la revendication 5, **caractérisé par**
l'arrêt de la génération de l'état de recouvrement de la première unité (26a) d'entraînement de convoyeur de fret lorsque
6.1 le capteur (32) de la première unité (26a) d'entraînement de convoyeur de fret émet à nouveau le signal de recouvrement ou
6.2 dans le cas a), les capteurs (32) d'unités (26) d'entraînement de convoyeur de fret voisines dans le sens de la largeur (B) de la première et de la deuxième rangée, dont au moins une est voisine de la première unité (26a) d'entraînement de convoyeur de fret, émettent le signal de recouvrement ou
6.3 dans le cas b), les capteurs (32) d'au moins deux unités (26) d'entraînement de convoyeur de fret de la même rangée que la première unité d'entraînement de convoyeur (26a), situées l'une derrière l'autre, émettent le signal de recouvrement.

7. Procédé de chargement de fret selon l'une des revendications 4 ou 5, caractérisé
7.1 en ce que, dans le cas b), l'état de recouvrement de la première unité (26a) d'entraînement de convoyeur de fret est généré lorsque les capteurs de la n-1 première unité (26a) d'entraînement de convoyeur de fret d'unités (26) d'entraînement de convoyeur de fret voisines de la même rangée que la première unité d'entraînement de convoyeur (26a) émettent le signal de recouvrement, et/ou
7.2 en ce que, dans le cas b), la génération est arrêtée lorsque les capteurs (32) de n unités (26) d'entraînement de convoyeur de fret situées les unes derrière les autres, dont de préférence au moins une est voisine de la première unité (26a) d'entraînement de convoyeur de fret, émettent le signal de recouvrement.

8. Procédé de chargement de fret selon l'une des revendications 5 à 7, **caractérisé**
**en ce que** la détection du fait qu'un ULD (18-1, 18-2) à transporter présente la première ou la deuxième largeur est effectuée par détection d'un type d'ULD en utilisant des signaux de recouvrement d'un réseau de capteurs (32) d'un dispositif de transport de fret d'entrée (22).

9. Programme informatique contenant des instructions lisibles par une machine qui, lorsqu'elles sont chargées et exécutées dans le dispositif de commande (34) d'un système (16) de chargement de fret selon l'une quelconque des revendications 1 à 4, amènent le système (16) de chargement de fret à mettre en œuvre le procédé de chargement de fret selon l'une quelconque des revendications 5 à 8.

10. Aéronef (12) comprenant une soute ayant un système (16) de chargement de fret selon l'une quelconque des revendications 1 à 4.
